# EUROPEAN PATENT APPLICATION

(11) **EP 3 779 770 A1**
(43) Date of publication of application: **17.02.2021**
(21) Application number: 19191912.5
(22) Date of filing: 15.08.2019
(51) Int. Cl.: G06K 9/00

(54) **A STEREO VISION SYSTEM AND METHOD FOR A MOTOR VEHICLE**

(71) Applicant: Veoneer Sweden AB, 447 83 Vårgårda (SE)
(72) Inventor: FORSLUND, David, 583 30 Linköping (SE); ASKLING, Joel, 583 30 Linköping (SE); SPIES, Hagen, 582 29 Linköping (SE); MOJTAHEDZADEH, Rasoul, 583 30 Linköping (SE); ROLL, Jacob, 585 97 Linköping (SE)
(74) Representative: Müller Verweyen

(57) **Abstract**

A stereo vision system for a motor vehicle comprises a plurality of imaging devices (12) in a stereo arrangement, said imaging devices being adapted to capture images of a surrounding of the motor vehicle, and a processing device (14) adapted to perform image processing on images captured by said imaging devices (12), wherein said processing device (14) comprises an object detector (31) adapted to detect object candidates in the vehicle surrounding, and a debris verifier (32) adapted to verify object candidates. The debris verifier (32) comprises a stereo section (33) adapted to perform stereo processing using a wide stereo matching core on detected object candidates.

## Description

A stereo vision system and method for a motor vehicle,
The invention relates to a stereo vision system for a motor vehicle, comprising a plurality of imaging devices in a stereo arrangement, said imaging devices being adapted to capture images of a surrounding of the motor vehicle, and a processing device adapted to perform image processing on images captured by said imaging devices, said processing device comprising an object detector adapted to detect object candidates in the vehicle surrounding, and a debris verifier adapted to verify object candidates.

Tires and other debris need to be detected in order to be able to perform suited measures to avoid collision in autonomous driving, such as automatic braking or automatic steering. Autonomous driving is in many cases initially developed for highways. It is crucial that the vehicle does not automatically brake for false detections. Since the braking distance is large when driving e.g. at 110 km/h (67 m to 97 m), very low false detection rates are required far away.

The object underlying the present invention is the reduction of false detection in autonomous driving or driver assistance systems.

The invention solves this problem by the features of the independent claims. The invention proposes verifying object detections, for example debris and tire detections, and more particularly verifying object detections using stereo in order to reduce the number of false detections. According to the invention, the debris verifier is adapted to perform stereo processing using a wide stereo matching core/kernel on detected object candidates. Since lost tires lying on the ground are comparatively wide and low in height, a wide, and preferably also low, stereo matching core increases the stereo matching precision a lot compared to conventional stereo matching cores used for object detection today.

Debris may be one or more objects which someone else has lost on the driving surface, or for example fallen tree branches, or things that have been swept by the wind onto the road, etc., and which pose dangerous objects for other vehicles due to potential danger of collision. Lost tires, for example, lie flat on the driving ground as single pieces, not being connected to a motor vehicle.

Preferably the debris verifier is adapted to perform a test whether or not an object candidate extends vertically over the driving surface. This test can advantageously be a hypothesis test with a flat driving surface as null hypothesis (planar hypothesis). The test can for example be performed by evaluating the depth map in the region of the detected object (object candidate). In the case that an object candidate is found not to extend vertically from the driving surface, it is advantageously discarded from further processing.

By performing the above mentioned test, it can be excluded that imaged objects are considered as corresponding to a true obstacle in the vehicle environment. For example, a dark shape on the ground (like a shadow) may look like a lost tire and could lead to a false detection. This can be safely ruled out by the above test since a colored shape or a shadow does not extend vertically above the driving surface (i.e. it has zero height) .

Using a planar hypothesis for debris detection is computationally very expensive. In contrast, the invention proposes using a planar hypothesis for debris verification, only, being performed after object detection.

After all, the debris verifier is preferably adapted to verify an object candidate as belonging to debris if it is found to be a wide object by its stereo section, and to extend vertically from the driving surface by its test section. Objects candidates verified to belong to debris in the vehicle environment are treated in a suitable manner by a decision section in the vision system. In particular, if a probability of colliding with detected debris becomes significant, suitable safety actions may be initiated, like automatic braking or automatic steering to avoid collision with the detected debris.

Preferably the stereo disparity will be derived in said verification unit only for a very limited part of the image around an object candidate to be considered. Due to this restriction, floating-point and/or sub-pixel precision can be afforded computationally for the stereo calculation in the verification unit. More generally, the object verification is preferably performed with higher computational precision than the object detection.

Different stereo matching cores can be considered. In a first embodiment, the stereo matching core is a bit wider than the detected object (like tire) and hence will capture both object edges in the same core. A detection box for a classification detection could for example be used to derive the width of the stereo matching core. In this case, and more generally, the width of the stereo matching core can advantageously be dynamically adjustable, for example depending on the size of the detected object/tire.

In another embodiment, the stereo matching core that is just a bit less wide than the detected object (like tire) in order to get some measurements within the object/tire. Also in this case and more generally, the size of the stereo matching core can advantageously be dynamic, e.g. depending on the size of the detected object/tire.

Preferably, the width of the stereo core is at least three times, more preferably at least four times, even more at least five times larger than its height. In preferred embodiments, the height of the stereo core is at most five pixels, preferably at most four pixels, further preferably at most three pixels and most preferably one or two pixels. In other words, the core is preferably at most five rows in height, and most preferably only one or two rows in height. Preferably, the width of the stereo matching core is at least 8 pixels, more preferably at least 10 pixels, even more preferably at least 12 pixels.

In some embodiments, the object verification is performed using a plurality of matching cores having different aspect ratios and/or different sizes.

The same verification procedure used for tires can be used for other debris that are wide.

In the following the invention shall be illustrated on the basis of preferred embodiments with reference to the accompanying drawings, wherein:
- Fig. 1: shows a schematic view of a vision system for a motor vehicle; and
- Fig. 2: shows a flow diagram illustrating a vision method for a motor vehicle.

The vision system 10 is mounted, or to be mounted, in or to a motor vehicle and comprises an imaging apparatus 11 for capturing images of a region surrounding the motor vehicle, for example a region in front of the motor vehicle. The imaging apparatus 11 may be mounted for example behind the vehicle windscreen or windshield, in a vehicle headlight, or in the radiator grille. The imaging apparatus 11 comprises a plurality of optical imaging devices 12, in particular cameras, forming a stereo imaging apparatus 11. The imaging apparatus 11 may comprise, or consist of, several cameras 12 mounted separtately. The optical imaging devices 12 preferably operate in the visible wavelength range and/or in the infrared wavelength range, where infrared covers near IR with wavelengths below 5 micro and/or far IR with wavelengths beyond 5 microns.

The imaging apparatus 11 is coupled to an on-board data processing device 14 adapted to process the image data received from the imaging apparatus 11. The data processing device 14 is preferably a digital device which is programmed or programmable and preferably comprises a microprocessor, a microcontroller, a digital signal processor (DSP), and/or a microprocessor part in a System-On-Chip (SoC) device, and preferably has access to, or comprises, a digital data memory 25.

The data processing device 14 comprises a stereo or pre-processing section 13 adapted to carry out a stereo algorithm on left/right images received from the imaging devices 12, in order to rectify and/or warp pairs of left/right images into stereo alignment. The pre-processing section 13 may be adapted to perform certain other functions, for example controlling the capture of images by the imaging apparatus 11, reading out the image information from the imaging apparatus 11, and/or creating disparity or depth images. The pre-processing section 13 may be implemented in a dedicated hardware device 17, like a Field Programmable Gate Array (FPGA), an Application Specific Integrated Circuit (ASIC), a Graphics Processing Unit (GPU) or an FPGA and/or ASIC and/or GPU part in a System-On-Chip (SoC) device.

The data processing device 14, or part of its functions, can be realized by a System-On-Chip (SoC) device comprising, for example, FPGA, DSP, ARM, GPU and/or microprocessor functionality. The data processing device 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of safety device 18 are performed automatically and continuously during driving in real time.

Image and data processing carried out in the processing device 14 advantageously comprises identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 18 depending on an estimation performed with respect to a tracked object, for example on an estimated collision probability.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the ego vehicle is an autonomous vehicle adapted to drive partly or fully autonomously or automatically, and driving actions of the driver are partially and/or completely replaced or executed by the ego vehicle.

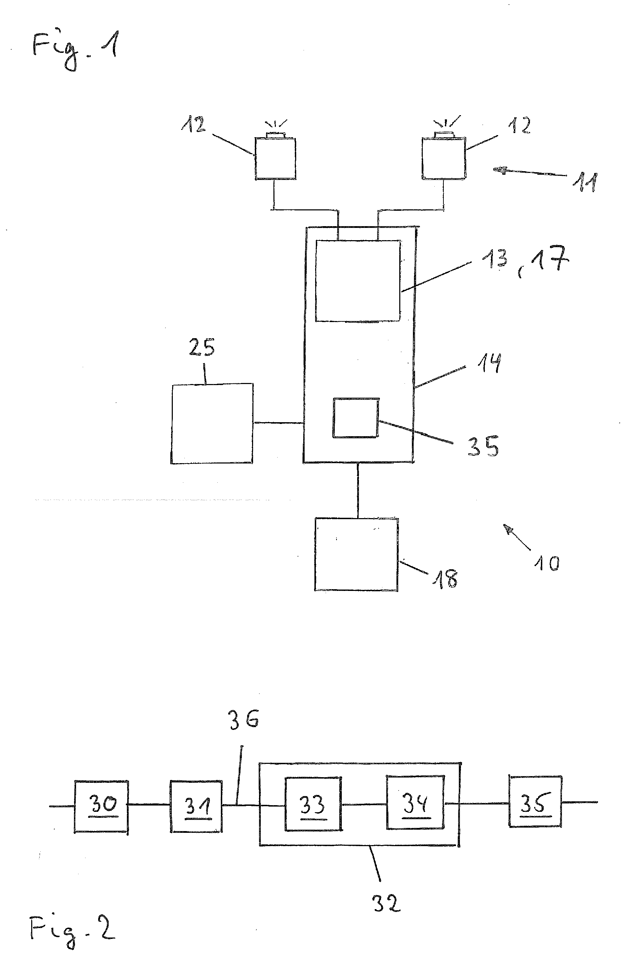

Image and data processing carried out in the processing device 14 according to a preferred embodiment is explained in the following with reference to Figure 2.

Depth/disparity images 30 output by the pre-processing section 13 are processed in an object detector 31. The object detector 31 is adapted to detect, and preferably also classify, possible objects (object candidates) in front of the motor vehicle, such as pedestrians, other vehicles, bicyclists and/or large animals. The object detector 31 advantageously comprises a tracker adapted to track over time the position of objects or object candidates identified in the captured images.

Object candidates 36 detected by the object detector 31 are forwarded to a debris verifyer 32 adapted to verify object candidates 36 as to whether or not they belong to debris, like lost tires, in the vehicle environment.

The debris verifier 32 comprises a stereo section 33 adapted to apply stereo processing on input object candidates 36 using a wide stereo matching core. The stereo matching core has a width of more than 10 pixels, for example 15 pixels, and a height of one or two pixels, only. The stereo matching core is preferably implemented on the same hardware device 17 as the pre-processing section 13.

The debris verifier 32 further comprises a test section 34 adapted to perform a test whether or not an object candidate extends vertically above the driving surface, in particular by performing a hypothesis test with a flat driving surface as null hypothesis. The test can for example be performed by evaluating the depth map output by pre-processing section 13 in the region of the object candidate under inspection. If the depth map does not show a vertically extending profile in the inspected region, the hypothesis is confirmed and the inspected object is not regarded as a physical object or obstacle.

The debris verifier 32 verifies an object candidate to be debris if it fulfils both of two conditions: it has been found to be a wide object by the stereo section 33, and it has been found to extend vertically above the driving surface or road by the test section 34.

Object candidates which are verified to be debris, like lost tires, by the debris verifier 32 in the above described manner are treated in a suitable manner by a decision section 35 in the vision system. In particular, if a probability of colliding with detected debris becomes significant, the decision section 35 initiates suitable safety actions, like automatic control 18 and/or automatic steering control 18 to avoid collision with the detected debris.

The stereo section 33 and the test section 34 may be arranged in series in the debris verifier 32, with the stereo section 33 arranged prior to the test section 34 as shown in Figure 2, or vice versa. Alternatively, the stereo section 33 and the test section 34 may be arranged in parallel in the debris verifier 32, or in any other suitable manner.

## Claims

1. A stereo vision system for a motor vehicle, comprising a plurality of imaging devices (12) in a stereo arrangement, said imaging devices being adapted to capture images of a surrounding of the motor vehicle, and a processing device (14) adapted to perform image processing on images captured by said imaging devices (12), wherein said processing device (14) comprises an object detector (31) adapted to detect object candidates in the vehicle surrounding, and a debris verifier (32) adapted to verify object candidates, **characterized in that** said debris verifier (32) comprises a stereo section (33) adapted to perform stereo processing using a wide stereo matching core on detected object candidates.

2. The vision system as claimed in claim 1, **characterized in that** said debris verifier (32) comprises a test section (34) adapted to perform a test whether or not an object candidate extends vertically above the driving surface.

3. The vision system as claimed in claim 2, **characterized in that** said test is a hypothesis test with a flat driving surface as null hypothesis.

4. The vision system as claimed in claim 2 or 3, **characterized in that** said debris verifier (32) is adapted to verify an object candidate as belonging to debris if it is found to be a wide object by the stereo section (33) and to extend vertically from the driving surface by the test section (34) .

5. The vision system as claimed in any one of the preceding claims, **characterized in that** the width of the stereo core is at least three times larger than its height.

6. The vision system as claimed in any one of the preceding claims, **characterized in that** the height of the stereo core is at most 5 pixels, preferably at most 4 pixels, further preferably at most 3 pixels and most preferably one or two pixels.

7. The vision system as claimed in any one of the preceding claims, **characterized in that** the width of the stereo matching core is at least 8 pixels, more preferably at least 10 pixels, even more preferably at least 12 pixels.

8. The vision system as claimed in any one of the preceding claims, **characterized in that** the object verification is performed with higher computational precision than the object detection.

9. The vision system as claimed in any one of the preceding claims, **characterized in that** the object verification is performed with floating-point and/or sub-pixel precision.

10. The vision system as claimed in any one of the preceding claims, **characterized in that** said debris verifier (32) is adapted to dynamically adjust the width of the wide stereo matching core.

11. The vision system as claimed in claim 10, **characterized in that** the width of the wide stereo matching core is dynamically adjustable depending on the size of the detected object.

12. The vision system as claimed in any one of the preceding claims, **characterized in that** the object verification is performed using a plurality of matching cores having different aspect ratios and/or different sizes.

13. The vision system as claimed in any one of the preceding claims, **characterized in that** said stereo section (33) is implemented in the same stereo hardware device (17) also performing a stereo calculation on left/right images prior to said object detection.

14. A stereo vision method for a motor vehicle, comprising capturing images of a surrounding of the motor vehicle, and performing image processing on captured images, wherein said image processing comprises detecting object candidates in the vehicle surrounding, and verifying object candidates, **characterized in that** said verifying object candidates comprises stereo processing using a wide stereo matching core on detected object candidates.
